# EUROPÄISCHE PATENTSCHRIFT

(11) **EP 1 516 130 B1**
(45) Veröffentlichungstag und Bekanntmachung des Hinweises auf die Patenterteilung: **15.11.2006**
(21) Anmeldenummer: 03735722.5
(22) Anmeldetag: 27.05.2003
(51) Int. Cl.: F16D 27/112

(54) **ELEKTROMAGNETISCHE REIBSCHLÜSSIGE SCHALTKUPPLUNG UND VERFAHREN ZU IHREM BETRIEB**
ELECTROMAGNETIC FRICTIONALLY ENGAGED CLUTCH AND METHOD FOR OPERATING THE SAME
EMBRAYAGE ELECTROMAGNETIQUE A FRICTION ET PROCEDE D'UTILISATION

(30) Priorität: 10.06.2002 DE 10225580
(43) Veröffentlichungstag der Anmeldung: 23.03.2005
(73) Patentinhaber: Valeo Sicherheitssysteme GmbH, 85253 Erdweg (DE)
(72) Erfinder: BITTNER, Eric, 81669 München (DE); HUMEZ, Thomas, 85221 Dachau (DE); SCHACHTL, Stephan, 80805 MÜNCHEN (DE); ZANG, Holger, 85221 Dachau (DE); DE JONG, Alexander, 85247 MACHTENSTEIN (DE)
(74) Vertreter: Podszus, Burghart
(86) Internationale Anmeldenummer: PCT/EP2003/050199
(87) Internationale Veröffentlichungsnummer: WO 2003/104671

(56) Entgegenhaltungen:
- EP-A- 0 793 034
- US-A- 3 263 784
- US-A- 5 739 605
- PATENT ABSTRACTS OF JAPAN vol. 2000, no. 02, 29. Februar 2000 (2000-02-29) & JP 11 301271 A (OI SEISAKUSHO CO LTD;AICHI MACH IND CO LTD), 2. November 1999 (1999-11-02)

## Beschreibung

Die Erfindung betrifft eine elektromagnetische reibschlüssige Schaltkupplung zur Anordnung innerhalb eines einen Antriebsmotor und eine Fahrzeugtür oder Fahrzeugklappe (Heckklappe, Motorhaube etc.) verbindenden Antriebsstranges. Die Erfindung bezieht sich ferner auf ein Verfahren zum Betrieb einer derartigen Schaltkupplung.

Eine elektromagnetische reibschlüssige Schaltkupplung nach dem Oberbegriff des Anspruchs 1 ist aus US-A-3,263,784 bekannt.

Bei Kraftfahrzeugen mit automatisch betätigbarer Fahrzeugtür oder Fahrzeugklappe (im folgenden auch zusammenfassend nur als Fahrzeugtür bezeichnet) wird beispielsweise vom Fahrer des Fahrzeuges durch eine entsprechende Betätigung eines in der Instrumententafel vorgesehenen Schalters die Fahrzeugtür geschlossen oder geöffnet. Hierzu wirkt das von dem Schalter erzeugte Schaltsignal auf eine elektronische Steuereinrichtung, die ihrerseits elektrische Steuersignale zur Aktivierung eines Elektromotors erzeugt, der dann seinerseits über ein nachgeschaltetes Getriebe und weiteren Übertragungselementen die Fahrzeugtür verschwenkt oder verschiebt.

Nachteilig ist bei diesen bekannten Kraftfahrzeugen unter anderem, daß bei einem manuellen Zudrücken der Fahrzeugtür aufgrund des mit der Fahrzeugtür in Wirkverbindung stehenden Getriebes bzw. Elektromotors ein hoher Widerstand zu überwinden ist und ein erhöhter Verschleiß dieser Bauteile auftritt.

Zur Vermeidung eines derartigen Verschleißes ist bereits eine automatisch betätigbare Fahrzeugtür vorgeschlagen worden, bei welcher der Motor bzw. das dem Motor nachgeschaltete Getriebe von der die Fahrzeugtür betätigenden Antriebswelle mittels einer elektromagnetischen Schaltkupplung entkuppelbar ist, so daß im ausgeschalteten Zustand der Schaltkupplung eine manuelle Betätigung der Fahrzeugtür möglich ist, ohne daß deren Bewegung durch die an der Antriebswelle der Kupplung angeordneten Baueinheiten (z.B. Elektromotor oder Zwischengetriebe) gehemmt wird.

Derartige elektromagnetische Schaltkupplungen sind in der Regel als reibschlüssige Schaltkupplungen ausgebildet und umfassen daher ein mit einem Reibbelag versehenes und mit einer ersten Welle drehfest verbundenes Rotorteil, an dem auf seiner dem Reibbelag abgewandten Seite eine elektrische Spule angeordnet ist, und eine drehfest, aber axial verschiebbar mit einer zweiten Welle verbundene Ankerscheibe, die im eingeschalteten Zustand der Schaltkupplung gegen den Reibbelag des Rotorteiles der ersten Welle gezogen wird und eine reibschlüssige Verbindung zwischen den beiden Wellen herstellt. Im abgeschalteten Zustand der Schaltkupplung werden die Ankerscheibe und das Rotorteil mittels einer Feder auseinandergedrückt, so daß zwischen Ankerscheibe und Reibbelag ein genau vorgegebener spaltförmiger Abstand besteht.

Diese Schaltkupplungen weisen daher den Nachteil auf, daß im nichtbestromten Fall aufgrund der offenen Kupplung die Fahrzeugtür leicht beweglich und häufig unkontrolliert den auf sie wirkenden Kräften (Schwerkraft, Federn der Aufhängung, Dämpfern etc.) ausgesetzt ist, wenn sie sich in einer zwischen der geschlossenen und der geöffneten Stellung befindlichen Zwischenstellung befindet. Heckklappen werden bei Vorhandensein einer entsprechend starken Feder nach dem Öffnen der Kupplung in der Regel aus der Zwischenstellung in die geöffnete Endlage verschwenkt, obwohl die Fahrzeugtür aus Sicherheitsgründen häufig in der jeweiligen Zwischenposition stehenbleiben soll.

In der nicht vorveröffentlichten deutschen Patentanmeldung Nr. 101 52 697.0 ist bereits eine Schaltkupplung vorgeschlagen worden, mittels welcher die Fahrzeugtür in jeder Zwischenposition sicher gehalten wird, wenn sich die Schaltkupplung in ihrem ausgeschalteten Zustand befindet, und mittels der auch eine manuelle Notbetätigung der Fahrzeugtür möglich ist. Hierzu ist ein elastisches Element, z.B. eine Druckfeder, vorgesehen, welches die Ankerscheibe der Schaltkupplung in axialer Richtung beaufschlagt, derart, daß die Ankerscheibe im ausgeschalteten Zustand der Schaltkupplung mit einer Kraft gegen den Reibbelag des Rotorteiles gedrückt wird, die groß genug ist, damit die Fahrzeugtür in der jeweiligen beim Ausschalten der Schaltkupplung eingenommenen Position sicher stehenbleibt. Hingegen soll bei einer anschließenden manuellen Betätigung der Fahrzeugtür der Reibschluß zwischen Ankerscheibe und Reibbelag überwindbar sein.

Als nachteilig hat sich bei dieser Schaltkupplung erwiesen, daß zur manuellen Betätigung der Fahrzeugtür ein relativ großer Kraftaufwand erforderlich ist.

Der Erfindung liegt die Aufgabe zugrunde, eine elektromagnetische reibschlüssige Schaltkupplung anzugeben, bei der die Fahrzeugtür in jeder Zwischenposition sicher gehalten wird, wenn sich die Schaltkupplung in ihrem ausgeschalteten Zustand befindet, und die sowohl eine kraftaufwendige manuelle Notbetätigung als auch eine Betätigung der Fahrzeugtür mit nur geringem manuellem Kraftaufwand zuläßt. Außerdem soll die axiale Führung der Ankerscheibe verbessert werden. Ferner soll ein Verfahren zum Betrieb einer derartigen Schaltkupplung angegeben werden.

Diese Aufgabe wird erfindungsgemäß hinsichtlich der Schaltkupplung durch die Merkmale des Anspruchs 1 und hinsichtlich des Verfahrens durch die Merkmale der Ansprüche 9 und 10 gelöst. Weitere, besonders vorteilhafte Ausgestaltungen der Erfindung offenbaren die Unteransprüche.

Die Erfindung beruht im wesentlichen auf dem Gedanken, einen Permanentmagneten vorzusehen, welcher die Ankerscheibe der Schaltkupplung in axialer Richtung beaufschlagt, derart, daß die Ankerscheibe im ausgeschalteten Zustand der Schaltkupplung mit einer Kraft gegen den Reibbelag des Rotorteiles gedrückt wird, die groß genug ist, damit die Fahrzeugtür in der jeweiligen beim Ausschalten der Schaltkupplung eingenommenen Position sicher stehenbleibt und daß bei einer anschließenden manuellen Betätigung der Fahrzeugtür der Reibschluß zwischen Ankerscheibe und Reibbelag überwindbar ist. Um ein relativ leichtgängiges manuelles Betätigen der Fahrzeugtür zu ermöglichen, wird die Spule derart mit Strom beaufschlagt, daß ihr magnetisches Feld zum Magnetfeld des Permanentmagneten entgegengerichtet ist und die Fahrzeugtür somit von Hand fast kraftlos bewegt werden kann.

Als vorteilhaft hat es sich erwiesen, wenn die Ankerscheibe in axialer Richtung zusätzlich zu der Magnetkraft des Permanentmagneten durch mindestens ein elastisches Element (Druckfeder, Tellerfeder, Wellscheibe, Gummipuffer etc.) beaufschlagt und gegen den Reibbelag des Rotorteiles gedrückt wird.

Als zweckmäßig hat es sich ferner erwiesen, wenn das Rotorteil auf seiner dem Reibbelag abgewandten Seite eine Ausnehmung aufweist, in welcher die Spule mindestens teilweise angeordnet ist, wobei die Spule gehäusefest gelagert ist.

Der Ankerscheibenträger kann auf seiner dem Rotorteil zugewandten Seite eine sich über den gesamten Umfang erstreckende Dichtlippe aufweisen, die den Reibbelag des Rotorteiles vor eintretende Schmierstoffe schützt. Selbstverständlich können aber auch andere Dichtungen, wie O-Ringe oder Filzteile, eingesetzt werden.

Mit der erfindungsgemäßen Kupplung ist es auf einfache Weise möglich, durch Vorgabe eines entsprechenden Spannungs- bzw. Stromverlaufes eine "Übertragungsmomentenkurve" vorzugeben, d.h., die Schaltkupplung kann in unterschiedlichen Stellungen der Fahrzeugtür unterschiedliche Übertragungsmomente realisieren.

Weitere Einzelheiten und Vorteile der Erfindung ergeben sich aus den folgenden anhand von Figuren erläuterten Ausführungsbeispielen. Es zeigen:
Fig.1 ein erstes Ausführungsbeispiel einer teilweise im Schnitt schematisch dargestellten Seitenansicht einer erfindungsgemäßen Schaltkupplung und
Fig.2 ein weiteres der Fig.1 entsprechendes Ausführungsbeispiel einer erfindungsgemäßen Schaltkupplung mit Federunterstützung.

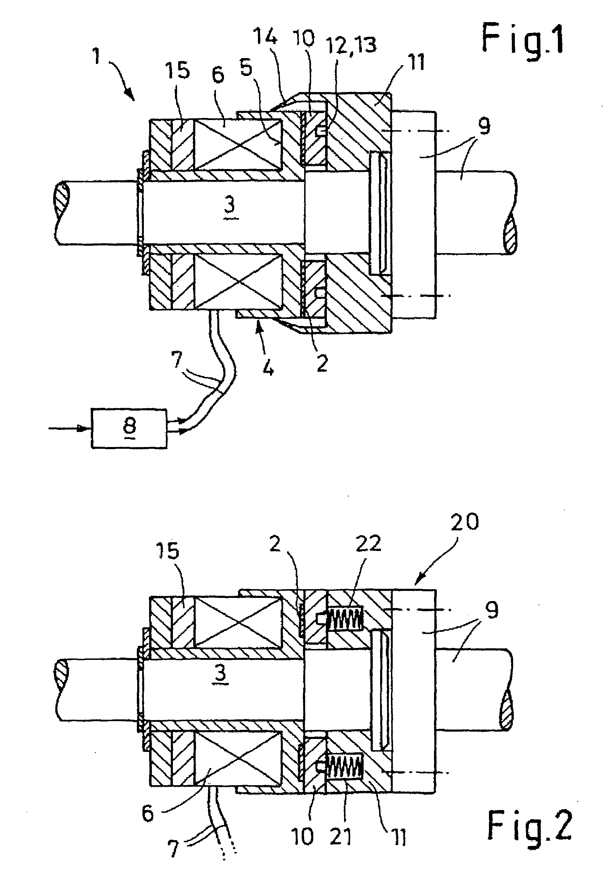

In Fig.1 ist mit 1 eine elektromagnetische reibschlüssige Schaltkupplung bezeichnet, die innerhalb eines Antriebsstranges zwischen einem nicht dargestellten Antriebsmotor und einer ebenfalls nicht dargestellten Heckklappe eines Kraftfahrzeuges angeordnet ist.

Die Schaltkupplung 1 umfaßt ein mit einem Reibbelag 2 versehenes und mit einer ersten Welle 3 (z.B. der mit dem Antriebsmotor verbundenen Antriebswelle) drehfest verbundenes Rotorteil 4, welches auf seiner dem Reibbelag 2 abgewandten Seite eine Ausnehmung 5 besitzt, in der eine elektrische Spule 6 gehäusefest gelagert ist. Die Spule 6 ist über elektrische Leitungen 7 mit einer elektrischen Steuereinrichtung 8 verbunden.

Die Schaltkupplung 1 weist ferner eine drehfest, aber axial verschiebbar mit einer zweiten Welle 9 (Abtriebswelle) verbundene Ankerscheibe 10 auf. Hierzu ist die zweite Welle 9 fest mit einem Ankerscheibenträger 11 verbunden, welcher axiale Führungsteile 12 umfaßt, die in entsprechende nutenförmige Ausnehmungen 13 der Ankerscheibe 10 eingreifen.

Der Ankerscheibenträger 11 besitzt auf seiner dem Rotorteil 4 zugewandten Seite eine sich über den gesamten Umfang erstreckende Dichtlippe 14, die den Reibbelag 2 des Rotorteiles 4 vollständig überdeckt und verhindert, daß Schmierstoffe in diesen Bereich eindringen können.

An dem Rotorteil 4 ist parallel zu der elektrischen Spule 6 ein Permanentmagnet 15 angeordnet, der eine magnetische Feldstärke erzeugt, die derart gewählt ist, daß bei nichtbestromter Spule 6 die Ankerscheibe 10 mit einer vorgegebenen Kraft gegen den Reibbelag 2 gedrückt wird und die Heckklappe in der jeweiligen beim Ausschalten der Schaltkupplung 1 eingenommenen Position aufgrund des Reibschlusses stehenbleibt. Allerdings soll der Reibschluß zwischen Ankerscheibe 10 und Reibbelag 2 bei einer anschließenden manuellen Betätigung (Notbetätigung) der Heckklappe überwindbar sein.

Nachfolgend wird auf die Wirkungsweise der Schaltkupplung 1 eingegangen:
Soll die nicht dargestellte Heckklappe z.B. geöffnet werden, so wird die elektrische Spule 6 durch die Steuereinrichtung 8 bestromt. Dadurch wird die magnetische Kraft des Permanentmagneten 15 erhöht. Wird die erste Welle 3 nun von einem Antriebsmotor angetrieben, so wird die zweite Welle 9 über die Schaltkupplung 1 mitgenommen und betätigt die nicht dargestellte Heckklappe.
Soll die Heckklappe vor Erreichen ihrer Endstellung in einer vorgegebenen Winkelstellung angehalten werden, so wird die Stromversorgung der Spule 6 durch die Steuereinrichtung 8 unterbrochen. Aufgrund der Magnetkraft des Permanentmagneten 15 verbleibt zwischen dem Reibbelag 2 und der Ankerscheibe 10 ein Reibmoment, welches dafür sorgt, daß die Heckklappe in ihrer eingenommenen Position sicher stehen bleibt. Durch eine entsprechend kräftige manuelle Betätigung der Heckklappe kann diese dann wieder geschlossen oder vollständig geöffnet werden (Notbetätigung z.B. beim Ausfall der Stromversorgung).
Soll hingegen die Heckklappe aus einer vorgegebenen Stellung ohne große Kraftaufwendung manuell betätigt werden, so wird die elektrische Spule 6 wiederum bestromt, wobei die Richtung des Stromes derart gewählt wird, daß das entstehende Magnetfeld das Mag-netfeld des Permanentmagneten 15 schwächt und die Heckklappe von Hand fast kraftlos betätigbar ist.

Die Erfindung ist selbstverständlich nicht auf das vorstehend beschriebene Ausführungsbeispiel beschränkt. So kann zur Unterstützung des Permanentmagneten 15 zusätzlich ein elastisches Element vorgesehen sein, welches bei nichtbestromter Spule 6 die Ankerscheibe 10 gegen das Rotorteil 4 drückt.

Ein entsprechendes Ausführungsbeispiel einer derartigen Schaltkupplung 20 ist in Fig.2 dargestellt. Dabei sind die mit 21 bezeichneten elastischen Elemente (Schraubendruckfedern) in entsprechenden Sacklochbohrungen 22 der Ankerscheibe 10 angeordnet. Ansonsten entspricht der Aufbau dieser Schaltkupplung 20 dem Aufbau der vorstehend anhand von Fig.1 erläuterten Schaltkupplung 1.

### Bezugszeichenliste

- 1: Schaltkupplung
- 2: Reibbelag
- 3: erste Welle
- 4: Rotorteil
- 5: Ausnehmung
- 6: elektrische Spule, Spule
- 7: elektrische Leitung
- 8: Steuereinrichtung
- 9: zweite Welle
- 10: Ankerscheibe
- 11: Ankerscheibenträger
- 12: Führungsteil
- 13: Ausnehmung
- 14: Dichtlippe
- 15: Permanentmagnet

- 20: Schaltkupplung
- 21: elastisches Element, Druckfeder
- 22: Sacklochbohrung

## Patentansprüche

1. Elektromagnetische reibschlüssige Schaltkupplung zur Anordnung innerhalb eines einen Antriebsmotor und eine Fahrzeugtür oder eine Fahrzeugklappe verbindenden Antriebsstranges mit den Merkmalen:
a) die Schaltkupplung (1; 20) umfaßt ein mit einem Reibbelag (2) versehenes und mit einer ersten Welle (3) drehfest verbundenes Rotorteil (4), an dem auf seiner dem Reibbelag (2) abgewandten Seite eine elektrische Spule (6) angeordnet ist und eine drehfest, aber axial verschiebbar mit einer zweiten Welle (9) verbundene Ankerscheibe (10);
b) an dem Rotorteil (4) ist zusätzlich zu der elektrischen Spule (6) mindestens ein Permanentmagnet (15) angeordnet, so daß bei nichtbestromter Spule (6) die Ankerscheibe (10) mit einer Kraft gegen den Reibbelag (2) des Rotorteiles (4) gedrückt wird, die groß genug ist, damit im Betrieb die Fahrzeugtür oder Fahrzeugklappe in der jeweiligen beim Ausschalten der Schaltkupplung (1; 20) eingenommenen Position sicher stehenbleibt und bei einer anschließenden manuellen Betätigung der Fahrzeugtür oder Fahrzeugklappe der Reibschluß zwischen Ankerscheibe (10) und Reibbelag (2) überwindbar ist,
**dadurch gekennzeichnet,** die zweite Welle (9) fest mit einem Ankerscheibenträger (11) verbunden ist, welcher axiale Führungsteile (12) umfasst, die in entsprechende nutenförmige Ausnehmungen (13) der Ankerscheibe (10) eingreifen.

2. Schaltkupplung nach Anspruch 1, **dadurch gekennzeichnet, daß** die Ankerscheibe (10) in axialer Richtung durch mindestens ein elastisches Element (21) beaufschlagt ist, derart, daß die Ankerscheibe (10) bei nichtbestromter elektrischer Spule (6) aufgrund des Permanentmagneten (15) und des elastischen Elementes (21) zusammen mit einer Kraft gegen den Reibbelag (2) des Rotorteiles (4) gedrückt wird, die groß genug ist, damit im Betrieb die Fahrzeugtür oder Fahrzeugklappe in der jeweiligen beim Ausschalten der Schaltkupplung (1; 20) eingenommenen Position sicher stehenbleibt und daß bei einer anschließenden manuellen Betätigung der Fahrzeugtür oder Fahrzeugklappe der Reibschluß zwischen Ankerscheibe (10) und Reibbelag (2) überwindbar ist.

3. Schaltkupplung nach Anspruch 2, **dadurch gekennzeichnet, daß** es sich bei dem elastischen Element (21) um eine Druckfeder, eine Tellerfeder, eine Wellscheibe oder ein Gummipuffer handelt.

4. Schaltkupplung nach Anspruch 1 oder 2, **dadurch gekennzeichnet, daß** die zweite Welle (9) außenseitig drehfest mit dem Ankerscheibenträger (11) verbunden ist.

5. Schaltkupplung nach Anspruch 4, **dadurch gekennzeichnet, daß** die zweite Welle (9) oder der Ankerseheibentrager (11) mindestens eine auf der der Ankerscheibe (10) zugewandten Seite offene Sacklochbohrung (22) zur Aufnahme der Druckfeder (21) enthält.

6. Schaltkupplung nach einem der Ansprüche 1 bis 5, **dadurch gekennzeichnet, daß** das Rotorteil (4) auf seiner dem Reibbelag (2) abgewandten Seite eine Ausnehmung (5) aufweist, in welcher die Spule (6) mindestens teilweise angeordnet ist.

7. Schaltkupplung nach einem der Ansprüche 1 bis 6, **dadurch gekennzeichnet, daß** die Spule (6) gehäusefest gelagert ist.

8. Schaltkupplung nach einem der Ansprüche 1 bis 7 **dadurch gekennzeichnet, daß** der Ankerscheibenträger (11) auf seiner dem Rotorteil (4) zugewandten Seite eine sich über den gesamten Umfang erstreckende Dichtlippe (14) umfaßt die den Reibbelag (2) des Rotorteiles (4) vollständig überdeckt.

9. Verfahren zum Betrieb der Schaltkupplung nach einem der Ansprüche 1 bis 8, **dadurch gekennzeichnet, daß** die elektrische Spule (6) zum Einkuppeln der Schaltkupplung (1; 20) mit Strom beaufschlagt wird, der ein Magnetfeld verursacht, das gleichgerichtet mit dem Magnetfeld des Pennanentmagneten (15) ist, so daß die Ankerscheibe (10) fest gegen den Reibbelag (2) des Rotorteiles (4) gedrückt wird und daß die elektrische Spule (6) zum Entkuppeln der Schaltkupplung (1; 20) mit Strom beaufschlagt wird, der ein dem Magnetfeld des Permanentmagneten (15) entgegengerichtetes Magnetfeld erzeugt, so daß die Ankerscheibe (10) nicht oder nur lose gegen den Reibbelag (2) des Rotorteiles (4) gedrückt wird.

10. Verfahren nach Anspruch 9, **dadurch gekennzeichnet, daß** die elektrische Spule (6) mit Strom beaufschlagt wird, der einen von der jeweiligen Stellung der Fahrzeugtür oder Fahrzeugklappe abhängigen Wert besitzt.

## Claims

1. Electromagnetic friction clutch designed to be placed in a kinetic line connecting a drive motor and a vehicle door or bonnet (tailgate, engine bonnet, etc.), with the following characteristics:
a) the clutch (1; 20) includes a rotor part (4) provided with a friction lining (2) and fixed in rotation to a first shaft (3), which includes a recess in which an electrical coil (6) is housed on its face opposite the friction lining (2), and an armature disk (10) fixed in rotation to a second shaft (9) but free to move in the axial direction;
b) a permanent magnet (15) is placed on the rotor part (4) in addition to the electrical coil (6) such that when the coil 6 is not power supplied, the armature disk (10) is pressed in contact with the friction lining (2) of the rotor part (4) with sufficient force to dependably stop the vehicle door or the vehicle bonnet during operation, in the position at which it is at the time that the power supply to the clutch (1; 20) is cut off, and that it must be possible to overcome the friction link between the armature disk (10) and the friction lining (2), if the door or the bonnet is actuated manually,
**characterised in that** the second shaft (9) is fixed to an armature disk support (11) that includes axial guiding elements (12) engaging into corresponding recesses (13) in the form of grooves in the armature disk (10).

2. Clutch set forth in claim 1, **characterised in that** the armature disk (10) is stressed in the axial direction by at least one elastic element (21) such that when the coil (6) is not powered, the armature disk (10) is pressed in contact with the friction lining (2) of the rotor part (4) under the combined action of the permanent magnet (15) and the elastic element (21) with a sufficient force to dependably stop the vehicle door or the vehicle bonnet during operation, in the position at which it is at the time that the power supply of the clutch (1; 20) is cut off, and that it is possible to overcome the friction link between the armature disk (10) and the friction lining (2) if the door or the bonnet is actuated manually later.

3. Clutch set forth in claim 2, **characterised in that** the elastic element (21) is a compression spring, a Belleville washer, a serrated washer or a rubber stop.

4. Clutch set forth in claim 1 or 2, **characterised in that** the second shaft (9) is fixed in rotation to the armature disk (11) on the outside surface.

5. Clutch set forth in claim 4, **characterised in that** the second shaft (9) or the armature disk support (11) includes at least one blind hole (22) open on the side towards the armature disk (10) designed to hold the compression spring (21).

6. Clutch set forth in one of claims 1 to 5, **characterised in that** the rotor part (4) includes a recess (5) on its face opposite the friction lining (2) in which the coil (6) is at least partially housed.

7. Clutch set forth in one of claims 1 to 6, **characterised in that** the coil (6) is fixed to the box.

8. Clutch according to one of claims 1 to 6, **characterised in that** the armature disk support (11) includes a lip seal (14), on its face facing the rotor part (4), extending around the entire circumference and entirely recovering the friction lining (2) of the rotor part (4).

9. Method used to operate the clutch set forth in one of claims 1 to 8, **characterised in that** the electrical coil (6) is powered by a current that generates a magnetic field in the same direction as the direction of the permanent magnet (15), to engage the clutch (1; 20), such that the armature disk (10) is pressed firmly in contact with the friction lining (2) of the rotor part (4) and **in that**, to disengage the clutch (1; 20), the electrical coil (6) is powered by a current that generates a magnetic field opposite to that of the permanent magnet (15) such that the armature disk (10) is not pressed into contact with the friction lining (2) of the rotor part (4), or only in a loose manner.

10. Method set forth in claim 9, **characterised in that** the electrical coil (6) is powered with a current with a value that depends on the position of the corresponding vehicle door or bonnet.

## Revendications

1. Embrayage à friction électromagnétique destiné à être placé dans une chaîne cinématique reliant un moteur d'entraînement et une porte de véhicule ou un capot de véhicule (hayon, capot moteur, etc.) ayant les caractéristiques suivantes :
a) l'embrayage (1 ; 20) comprend une partie rotor (4) munie d'une garniture de friction (2) et solidaire en rotation d'un premier arbre (3), qui, sur sa face opposée à la garniture de friction (2), comporte un évidement dans lequel est logée une bobine électrique (6), et un disque d'armature (10) solidaire en rotation d'un deuxième arbre (9) mais mobile axialement ;
b) sur la partie rotor (4) est disposé, en plus de la bobine électrique (6), un aimant permanent (15) de manière que, lorsque la bobine 6 n'est pas alimentée, le disque d'armature (10) soit pressé contre la garniture de friction (2) de la partie rotor (4) avec une force suffisamment grande pour arrêter de manière sûre, en cours de fonctionnement, la porte de véhicule ou le capot de véhicule dans la position dans laquelle il se trouve respectivement au moment de la coupure de l'embrayage (1 ; 20) et qu'il soit possible de vaincre la liaison par friction entre le disque d'armature (10) et la garniture de friction (2) si, par la suite, on actionne la porte ou le capot manuellement,
**caractérisé en ce que** le deuxième arbre (9) est solidaire d'un support de disque d'armature (11) qui comprend des éléments de guidage axiaux (12) s'engageant dans des évidements (13) correspondants en forme de rainures du disque d'armature (10).

2. Embrayage selon la revendication 1, **caractérisé en ce que** le disque d'armature (10) est sollicité dans le sens axial par au moins un élément élastique (21) de manière que, lorsque la bobine (6) n'est pas alimentée, le disque d'armature (10) soit pressé contre la garniture de friction (2) de la partie rotor (4) sous l'action conjointe de l'aimant permanent (15) et de l'élément élastique (21) avec une force suffisamment grande pour arrêter de manière sûre, en cours de fonctionnement, la porte de véhicule ou le capot de véhicule dans la position dans laquelle il se trouve respectivement au moment de la coupure de l'embrayage (1 ; 20) et qu'il soit possible de vaincre la liaison par friction entre le disque d'armature (10) et la garniture de friction (2) si, par la suite, on actionne la porte ou le capot manuellement.

3. Embrayage selon la revendication 2, **caractérisé en ce que** l'élément élastique (21) est un ressort de compression, une rondelle Belleville, une rondelle ondulée ou un butoir en caoutchouc.

4. Embrayage selon la revendication 1 ou 2, **caractérisé en ce que** le deuxième arbre (9) est solidaire en rotation du support de disque d'armature (11) côté extérieur.

5. Embrayage selon la revendication 4, **caractérisé en ce que** le deuxième arbre (9) ou le support de disque d'armature (11) comporte au moins un trou borgne (22) ouvert sur le côté tourné vers le disque d'armature (10) destiné à recevoir le ressort de compression (21).

6. Embrayage selon l'une des revendications 1 à 5, **caractérisé en ce que** la partie rotor (4) comporte un évidement (5) sur sa face opposée à la garniture de friction (2) dans lequel est logée la bobine (6) au moins partiellement.

7. Embrayage selon l'une des revendications 1 à 6, **caractérisé en ce que** la bobine (6) est solidaire du boîtier.

8. Embrayage selon l'une des revendications 1 à 6, **caractérisé en ce que** le support de disque d'armature (11) comprend, sur sa face tournée vers la partie rotor (4), un joint à lèvre (14) s'étendant sur toute la circonférence et recouvrant entièrement la garniture de friction (2) de la partie rotor (4).

9. Procédé pour faire fonctionner l'embrayage selon l'une des revendications 1 à 8, **caractérisé en ce que**, pour embrayer l'embrayage (1 ; 20), la bobine électrique (6) est alimentée par un courant qui engendre un champ magnétique de même sens que celui de l'aimant permanent (15), de manière que le disque d'armature (10) soit pressé fortement contre la garniture de friction (2) de la partie rotor (4) et **en ce que**, pour débrayer l'embrayage (1 ; 20), la bobine électrique (6) est alimentée en un courant qui engendre un champ magnétique opposé à celui de l'aimant permanent (15) de manière que le disque d'armature (10) ne soit pas pressé contre la garniture de friction (2) de la partie rotor (4) ou seulement de manière lâche.

10. Procédé selon la revendication 9, **caractérisé en ce que** la bobine électrique (6) est alimentée en un courant d'une valeur qui dépend de la position respective de la porte de véhicule ou du capot de véhicule.
